# DEMANDE DE BREVET EUROPEEN

(11) **EP 1 211 018 A1**
(43) Date de publication de la demande: **05.06.2002**
(21) Numéro de dépôt: 01403042.3
(22) Date de dépôt: 27.11.2001
(51) Int. Cl.: B23Q 7/14, B65G 37/02, B65G 21/06

(54) **Installation pour la circulation de palettes porte-pièces et son procédé de montage**

(30) Priorité: 30.11.2000 FR 0015516
(71) Demandeur: Prodel Holding, 60170 Carlepont (FR)
(72) Inventeur: Prodel, Jacques, 60170 Carlepont (FR)
(74) Mandataire: Bezault, Jean

(57) **Abrégé**

Une installation pour la circulation de palettes porte-pièces comprenant un bâti (10) propre à supporter des modules de circulation des palettes, et comprenant au moins un cadre vertical (16) formé d'une structure mécano-soudée rigide à partir de profilés standards (20, 22, 24, 26), ainsi que des caissons (18) formés chacun d'une structure mécano-soudée à partir de profilés standards (42, 46, 48) et propres à être fixés de manière amovible de part et d'autre du cadre vertical (16). Chacun des caissons (18) comprend une partie supérieure surfacée (44) propre à recevoir au moins un module et une partie inférieure (40) munie de pieds réglables (50) pour le réglage de l'horizontalité de la partie supérieure surfacée. Application à la production de pièces par assemblage et/ou usinage.

## Description

L'invention concerne les installations pour la circulation de palettes porte-pièces.

On connaît déjà des installations de ce type, appelées aussi "ateliers flexibles", qui comprennent un bâti propre à supporter des modules de circulation des palettes. Ces modules peuvent accueillir des postes de travail et/ou offrir des fonctions de circulation pure. Dans de telles installations connues, des moyens sont prévus pour déplacer les palettes à l'intérieur d'un module et d'un module à l'autre. Il est connu pour cela d'utiliser en particulier des courroies à mouvement continu pour assurer le déplacement d'une palette entre différents postes de travail afin d'effectuer une succession d'opérations, par exemple d'assemblage et/ou d'usinage, sur les pièces que portent les palettes.

Il est connu aussi de prévoir des palettes motorisées, évitant ainsi le recours à des moyens de déplacement intégrés aux modules de l'installation.

Ainsi, ces installations permettent d'assurer une production de pièces par une succession d'opérations effectuées manuellement et/ou automatiquement sur les postes de travail.

Dans une installation de ce type, connue par le brevet français n° 81 17272 (numéro de publication 2 512 723), le bâti, encore appelé ossature, comprend des pieds supportant des traverses horizontales, elles-mêmes reliées par des moyens d'entretoisement, pour permettre le montage des modules à la manière d'un tiroir.

Ces installations ont donné parfaite satisfaction jusqu'à présent compte tenu des vitesses et accélérations relativement faibles assumées par les palettes.

Cependant, avec les progrès de la robotique, les palettes se déplacent à des vitesses de plus en plus élevées et sont soumises également à des accélérations de plus en plus fortes, ce qui génère des vibrations importantes, auxquelles les bâtis de la technique antérieure ne sont pas susceptibles de résister efficacement.

La demanderesse a constaté que les bâtis des installations connues n'offraient pas toujours une rigidité suffisante pour supporter des vibrations importantes, telles que générées par le déplacement de palettes avec des vitesses et accélérations élevées.

Outre la rigidité, un bâti d'une telle installation doit satisfaire à de nombreuses exigences.

En particulier, le bâti doit autoriser le passage de différents réseaux, notamment d'électricité et d'air comprimé, pour l'alimentation des différents modules et de leurs équipements.

Généralement, cela nécessite d'aménager des passages appropriés dans le bâti, ce qui peut nuire à sa rigidité.

En outre, un tel bâti doit pouvoir être monté facilement sur son site d'implantation en permettant une parfaite mise à niveau de l'ensemble, et spécialement des modules.

L'un des buts de l'invention est, en conséquence, de procurer une installation du type précité dont le bâti offre une excellente rigidité pour supporter des vibrations élevées, tout en étant d'une conception mécanique simple.

Un autre but de l'invention est de procurer une telle installation dont le bâti peut être monté aisément et dans des conditions telles que les modules peuvent être facilement mis à niveau.

Un autre but encore de l'invention est de procurer un tel bâti qui permet le passage de différents réseaux, en particulier d'électricité et d'air comprimé, et cela sans affecter sa rigidité et sa résistance aux vibrations.

L'invention propose à cet effet une installation pour la circulation de palettes porte-pièces comprenant un bâti propre à supporter des modules de circulation desdites palettes.

Selon une définition générale de l'invention, le bâti de l'installation comprend au moins un cadre vertical formé d'une structure mécano-soudée rigide à partir de profilés standards, ainsi que des caissons formés chacun d'une structure mécano-soudée rigide à partir de profilés standards, et propres à être fixés de manière amovible de part et d'autre du cadre vertical, chacun des caissons comprenant une partie supérieure surfacée propre à recevoir au moins un module et une partie inférieure munie de pieds réglables pour le réglage de l'horizontalité de la partie supérieure surfacée.

Ainsi, le bâti de l'invention comprend essentiellement un cadre vertical et des caissons fixés de manière amovible de part et d'autre de ce cadre vertical. Le cadre et les caissons sont réalisés chacun sous la forme d'une structure mécano-soudée rigide obtenue à partir de profilés standards.

Le cadre, qui est disposé verticalement, forme la partie centrale du bâti et fait interface entre les caissons. Ce sont ces caissons qui reposent au sol par l'intermédiaire de pieds réglables permettant de garantir l'horizontalité de la partie supérieure surfacée de chaque caisson.

En effet, cette partie supérieure surfacée doit être parfaitement horizontale pour que le module qu'elle recevra ultérieurement soit, lui aussi, parfaitement horizontal.

De par sa conception à partir d'éléments ayant une structure mécano-soudée rigide, le bâti est d'une rigidité extrême et permet ainsi une circulation de palettes porte-pièces avec des vitesses élevées (typiquement de l'ordre de quelques mètres par seconde) et des accélérations également élevées.

Ce bâti offre, en outre, l'avantage d'être réalisé à partir de profilés standards. A ce titre, on préfère tout particulièrement utiliser des profilés en acier du type IPN (I Profil Normalisé) du commerce.

De tels profilés sont disponibles dans le commerce avec des sections de différentes dimensions. Ils sont prévus pour être découpés en tronçons de longueurs voulues, en fonction de l'utilisation souhaitée.

Jusqu'à présent, de tels profilés ont été utilisés essentiellement dans le domaine du bâtiment, mais jamais dans celui de machines ou d'installations du type de l'invention.

De tels profilés sont facilement disponibles, aisément découpables à la longueur voulue et, en outre, facilement usinables. Ils offrent, en outre, l'avantage d'être très résistants, notamment du fait de leur section en I composée d'une âme centrale rattachée à deux ailes.

Dans une forme de réalisation préférée de l'invention, le cadre vertical comprend un profilé inférieur horizontal, un profilé supérieur horizontal, un profilé intermédiaire horizontal et deux profilés verticaux reliés aux extrémités respectives des profilés horizontaux.

De manière préférentielle, le profilé inférieur horizontal s'étend sensiblement au niveau de la partie inférieure des caissons sans toutefois reposer au sol, le profilé intermédiaire horizontal s'étend sensiblement au niveau de la partie supérieure surfacée des caissons, tandis que le profilé supérieur s'étend à distance par rapport au niveau de la partie supérieure des caissons.

On réalise ainsi un cadre de forme générale rectangulaire qui est en outre renforcé par la présence du profilé horizontal intermédiaire, procurant ainsi une structure extrêmement rigide.

Dans une forme de réalisation préférée de l'invention, le cadre vertical est muni, sur chaque côté, de six plaques de fixation qui comprennent quatre plaques de fixation de caisson propres à être fixées de manière amovible sur quatre plaques de fixation homologues faisant partie d'un caisson, ainsi que deux plaques de fixation de cadre propres à être fixées de manière amovible sur un cadre vertical adjacent.

Dans une forme de réalisation préférée de l'invention, les six plaques de fixation situées d'un côté du cadre s'étendent horizontalement et comprennent deux plaques inférieures fixées au niveau du profilé inférieur du cadre, deux plaques intermédiaires fixées respectivement au niveau du profilé intermédiaire et deux plaques supérieures fixées au niveau du profilé supérieur du cadre.

De manière préférentielle, les six plaques de fixation sont coplanaires et soudées au cadre vertical, et elles comprennent trois plaques qui s'étendent au-delà d'un des deux profilés verticaux et trois plaques qui s'étendent au-delà de l'autre profilé vertical.

Ainsi, la présence de ces plaques permet aussi la fixation d'un autre cadre vertical adjacent.

Selon une autre caractéristique de l'invention, les plaques de fixation de caisson formant partie du cadre sont propres à être fixées respectivement contre les quatre plaques homologues d'un caisson par l'intermédiaire de moyens de fixation, du type à vissage, et avec interposition de plaques d'espacement.

Sous un autre aspect, l'invention concerne un procédé de montage d'une installation telle que définie précédemment, qui comprend les opérations suivantes :
a) assembler le cadre au sol ;
b) placer le cadre verticalement et le tenir verticalement ;
c) présenter les caissons de part et d'autre du cadre vertical et les fixer à celui-ci ;
d) répéter, le cas échéant, les opérations a) à c) ci-dessus pour d'autres cadres et caissons, pour former le bâti de l'installation ;
e) monter des équipements ou accessoires sur le bâti ainsi constitué ; et
f) régler le niveau en agissant sur les pieds réglables des caissons.
   Ce procédé comprend, en outre, avantageusement l'opération supplémentaire suivante :
g) fixer les modules sur les parties supérieures surfacées des caissons.

Dans la description qui suit, faite seulement à titre d'exemple, on se réfère aux dessins annexés, sur lesquels :
- la Figure 1 est une vue d'extrémité d'un bâti d'une installation selon l'invention ;
- la Figure 2 est une vue de côté correspondant à la Figure 1 ;
- la Figure 3 est un détail, représenté à échelle agrandie, de la figure 1 ; et
- la Figure 4 est une vue partielle de dessus d'un bâti analogue à celui des Figures 1 à 3.

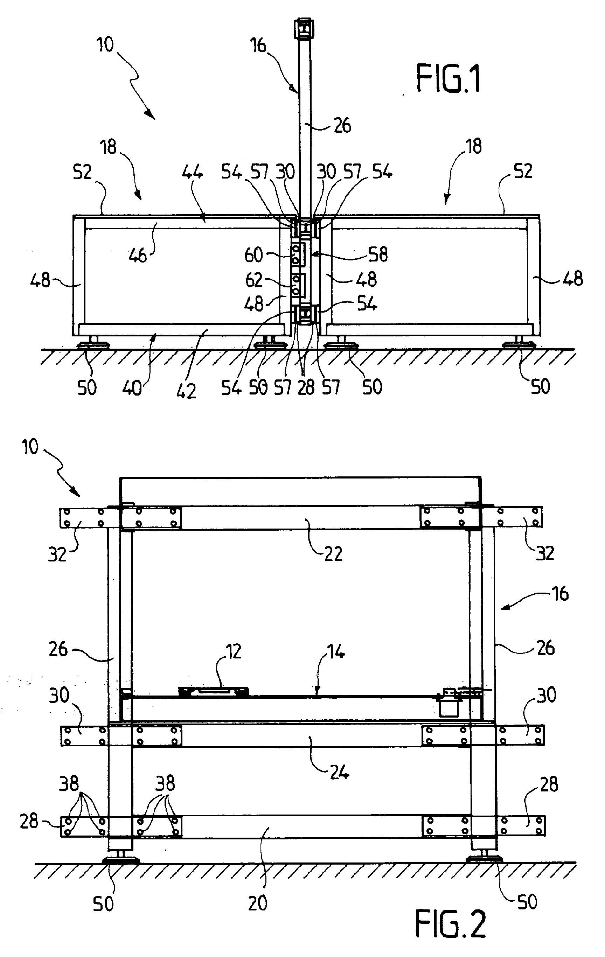

On se réfère d'abord aux Figures 1 et 2 qui représentent un bâti 10 d'une installation destinée à la circulation de palettes porte-pièces 12 sur des modules 14 portés par le bâti.

Dans l'exemple de réalisation représenté sur les dessins, le bâti 10 constitue seulement une partie du bâti total (ou ossature) de l'installation.

Comme on peut le voir sur les Figures 1 et 2, ce bâti 10 comprend un cadre vertical 16 formé d'une structure mécano-soudée rigide et deux caissons 18 formés chacun d'une structure mécano-soudée rigide. Ces deux caissons sont propres à être fixés de manière amovible de part et d'autre du cadre vertical 16.

Le cadre vertical 16 (Figure 2) est formé à partir de cinq profilés standards qui sont ici des profilés en acier du type IPN (I Profil Normalisé) du commerce. Ces profilés ont une section en I et sont disponibles avec différents types de sections et différentes longueurs. Ils peuvent être facilement découpés à la longueur voulue et usinés si nécessaire.

Le cadre 16 comprend un profilé inférieur horizontal 20, un profilé supérieur horizontal 22, un profilé intermédiaire horizontal 24 et deux profilés verticaux 26 reliés aux extrémités respectives des profilés horizontaux 20, 22 et 24. Dans l'exemple de réalisation représenté, le profilé intermédiaire 24 est situé plus proche du profilé inférieur 20 que du profilé supérieur 22.

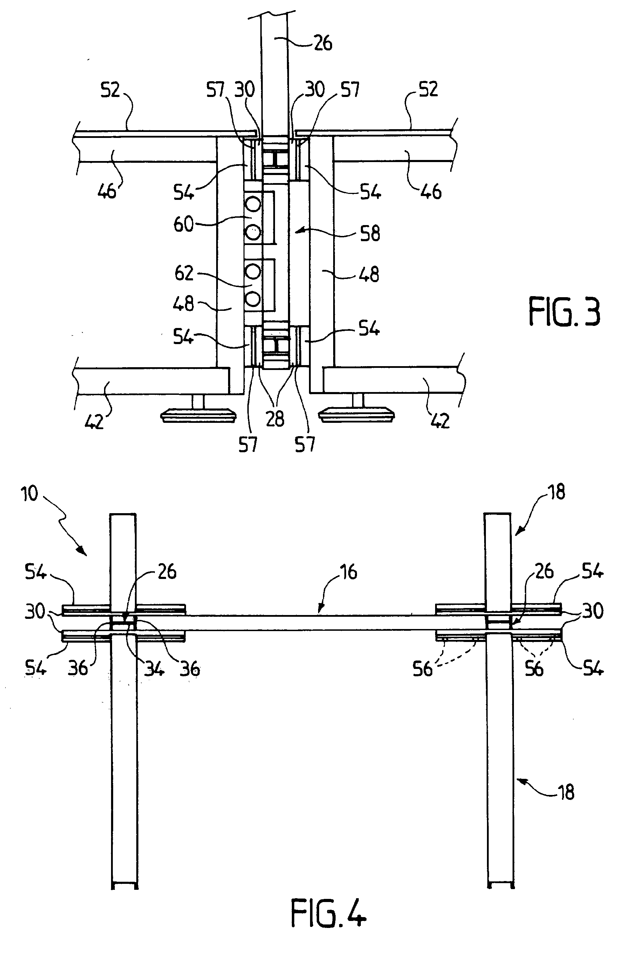

Sur chacun des profilés 26, et sur chaque côté de celui-ci, sont fixées trois plaques de fixation, à savoir une plaque inférieure 28 au niveau du profilé inférieur 20, une plaque intermédiaire 30 au niveau du profilé intermédiaire 24 et une plaque supérieure 32 au niveau du profilé supérieur 22. Ainsi, chacun des profilés verticaux 26 reçoit en tout six plaques de fixation, à savoir trois plaques 28, 30 et 32 d'un côté du cadre vertical et trois autres plaques 28, 30 et 32 de l'autre côté du cadre. Ces plaques sont perpendiculaires à la direction générale du profilé et sont soudées sur celui-ci, comme on le voit le mieux sur la Figure 4.

Le profilé 26 comprend une âme 34 reliée à deux ailes 36 (Figure 4). Les deux plaques homologues, par exemple les deux plaques 32, sont soudées respectivement sur les extrémités des ailes 36, et de chaque côté du profilé.

Chacune des plaques 28, 30 et 32 dépasse ainsi de part et d'autre du profilé pour fournir à chaque fois deux attaches. Chacune des parties dépassantes comporte quatre trous, par exemple quatre trous 38 d'un côté de la plaque 28 et quatre autres trous 38 de l'autre côté de la plaque 28 (Figure 2).

Les plaques de fixation 28, 30 et 32 sont fixées respectivement aux profilés 20, 22 et 24 par des vis (non représentées), passant au travers des trous 38.

En variante, il serait possible de souder directement les plaques 28, 30 et 32 respectivement sur les profilés 20, 24 et 22, mais cela supprimerait le caractère de démontabilité du cadre.

En règle générale, il est préférable que les plaques de fixation 28, 30 et 32 soient soudées sur les profilés, dans la mesure où il s'agit d'une liaison perpendiculaire. Par contre, on préfère des liaisons amovibles, en particulier par vissage, lorsqu'il s'agit de relier une plaque à un élément qui s'étend dans la direction parallèle.

Comme on le comprend d'après la Figure 2, les plaques 28, 30 et 32 des deux profilés verticaux 26 permettent la fixation des profilés horizontaux 20, 22 et 24. Les parties des plaques de fixation qui dépassent des profilés 26, au-delà du cadre, permettent la fixation d'autres profilés horizontaux (non représentés) faisant partie d'un cadre adjacent, ce qui permet de prolonger le bâti à la demande, en fonction de la configuration et des dimensions de l'installation souhaitée.

Chacun des caissons 18 est formé aussi d'une structure mécano-soudée à partir de profilés standard, et en particulier de profilés en acier du type IPN du commerce, de même que pour le cadre 16.

Chacun des caissons comprend une partie inférieure 40 formée de quatre profilés 42 agencés pour former un cadre rectangulaire et une partie supérieure 44 formée de quatre profilés rectangulaires 46 agencés pour former un cadre rectangulaire homologue du précédent. La partie inférieure 40 et la partie supérieure 44 sont réunies entre elles par quatre profilés verticaux 48. On constitue ainsi un caisson ayant la forme générale d'un parallélépipède dont les arêtes sont définie par des profilés, lesquels sont avantageusement soudés entre eux pour définir un caisson rigide.

La partie inférieure 40 est munie de quatre pieds réglables 50, tandis que la partie supérieure 44 est surfacée. Elle comporte à cet effet une plaque de surface 52 destinée à recevoir un module 14.

Chacun des caissons 18 est muni de quatre plaques de fixation 54 qui constituent des plaques homologues des quatre plaques de fixation (deux plaques 28 et deux plaques 30) situées d'un côté du cadre 16.

Les plaques 54 sont horizontales et coplanaires et soudées au caisson, c'est-à-dire sur les profilés verticaux du caisson, pour définir, comme précédemment, une liaison soudée pour des éléments perpendiculaires.

Les quatre plaques de fixation 54 du caisson sont prévues pour être vissées contre les deux plaques inférieures 28 et les deux plaques intermédiaires 30 situées d'un côté du cadre 16. Ces plaques de fixation ont sensiblement les mêmes dimensions et viennent en correspondance les unes des autres. Pour cela, les plaques de fixation 54 du caisson sont munies aussi de quatre trous 56 (Figure 4),homologues des trous 38 des plaques de fixation du cadre vertical. Sur la figure 4, les caissons 18 (représentés partiellement) ont des profondeurs différentes, contrairement aux caissons des Figures 1 et 2 qui ont la même profondeur.

Le profilé inférieur horizontal 20 s'étend sensiblement au niveau de la partie inférieure 40 des caissons sans toutefois reposer au sol, tandis que le profilé intermédiaire horizontal 24 s'étend sensiblement au niveau de la partie supérieure surfacée 44 des caissons et que le profilé supérieur s'étend à distance par rapport au niveau de la partie supérieure surfacée 44 des caissons.

Comme on peut le voir sur les Figures 1, 3 et 4, chacune des plaques de fixation 54 de caisson est fixée sur une plaque homologue 28 ou 30 du cadre avec interposition d'une ou plusieurs plaques d'espacement 57. De la sorte, on peut ménager un espace libre 58 entre le caisson et le cadre pour permettre le passage de réseaux 60 et 62 qui peuvent être des conduits ou câbles électriques, ou des conduits destinés à véhiculer de l'air comprimé.

Pour monter le bâti de l'installation, on commence d'abord par assembler le cadre au sol à partir des deux profilés verticaux 26 et des trois profilés horizontaux 20, 22 et 24. Les deux profilés verticaux 26 ont préalablement été équipés chacun des plaques de fixation 28, 30 et 32 soudées en usine. L'assemblage des éléments du cadre s'effectue par vissage.

Ensuite, on place le cadre verticalement et on le tient verticalement pour permettre la présentation des caissons 18 de part et d'autre du cadre. On remarquera que le cadre doit être maintenu au-dessus du sol, c'est-à-dire que le profilé inférieur 20 est situé à distance du sol. Les quatre plaques de fixation d'un caisson sont assemblées sur les plaques homologues du cadre par vissage avec interposition des plaques d'espacement appropriées.

On répète éventuellement les opérations ci-dessus pour fixer d'autres cadres et caissons, et constituer le bâti complet de l'installation. Ensuite, on procède au montage d'équipements ou accessoires sur le bâti ainsi constitué, par exemple au montage des réseaux 60 et 62. A ce stade, on règle le niveau en agissant sur les pieds réglables des caissons, de manière que les parties supérieures surfacées 44 des caissons soient parfaitement horizontales.

Ensuite, on procède au montage des modules 14 qui servent à véhiculer les palettes 12. Ces modules peuvent accueillir des postes de travail, manuels ou automatiques, et/ou offrir des fonctions de circulation pure. Le déplacement des palettes 12 peut être effectué soit par des moyens de déplacement faisant partie des modules eux-mêmes, tels que des moyens à courroie, soit encore par des moyens de motorisation intégrés aux palettes.

On procure ainsi un bâti de structure rigide pouvant être facilement réalisé à partir d'éléments standards du commerce et pouvant être facilement monté et réglé sur le site d'implantation de l'installation.

Un tel bâti conserve sa rigidité même avec des palettes qui se déplacent à des vitesses élevées et avec des accélérations élevées.

L'invention s'applique de façon générale aux installations, parfois appelées aussi "ateliers flexibles", destinées à l'assemblage et/ou l'usinage de pièces portées par des palettes.

## Revendications

1. Installation pour la circulation de palettes porte-pièces (12), comprenant un bâti (10) propre à supporter des modules (14) de circulation des palettes,
**caractérisée en ce que** le bâti (10) comprend au moins un cadre vertical (16) formé d'une structure mécano-soudée rigide à partir de profilés standards (20, 22, 24, 26), ainsi que des caissons (18) formés chacun d'une structure mécano-soudée à partir de profilés standards (42, 46, 48) et propres à être fixés de manière amovible de part et d'autre du cadre vertical (16), et **en ce que** chacun des caissons (18) comprend une partie supérieure surfacée (44) propre à recevoir au moins un module (14) et une partie inférieure (40) munie de pieds réglables (50) pour le réglage de l'horizontalité de la partie supérieure surfacée.

2. Installation selon la revendication 1, **caractérisée en ce que** les profilés standards (20, 22, 24, 26) du cadre vertical (16) et les profilés standards (42, 46, 48) des caissons (18) sont des profilés en acier du type IPN du commerce.

3. Installation selon la revendication 1, **caractérisée en ce que** le cadre vertical (16) comprend un profilé inférieur horizontal (20), un profilé supérieur horizontal (22), un profilé intermédiaire horizontal (24) et deux profilés verticaux (26) reliés aux extrémités respectives des profilés horizontaux (20, 22, 24).

4. Installation selon la revendication 2, **caractérisée en ce que** le profilé inférieur horizontal (20) s'étend sensiblement au niveau de la partie inférieure (40) des caissons sans toutefois reposer au sol, **en ce que** le profilé intermédiaire horizontal (24) s'étend sensiblement au niveau de la partie supérieure surfacée (44) des caissons, et **en ce que** le profilé supérieur (22) s'étend à distance par rapport au niveau de la partie supérieure surfacée (44) des caissons.

5. Installation selon l'une des revendications 3 et 4, **caractérisée en ce que** le cadre vertical (16) est muni, sur chaque côté, de six plaques de fixation (28, 28, 30, 30, 32, 32) qui comprennent quatre plaques de fixation de caisson (28, 28, 30, 30) propres à être fixées de manière amovible sur quatre plaques de fixation (54) homologues faisant partie d'un caisson (18) et deux plaques de fixation de cadre (32) propres à être fixées de manière amovible sur une cadre vertical adjacent.

6. Installation selon la revendication 5, **caractérisée en ce que** les six plaques de fixation (28, 28, 30, 30, 32, 32) situées d'un côté du cadre (16) s'étendent horizontalement et comprennent deux plaques inférieures (28) fixées au niveau du profilé inférieur (20) du cadre, deux plaques intermédiaires (30) fixées au niveau du profilé intermédiaire (24) et deux plaques supérieures (32) fixées au niveau du profilé supérieur (22) du cadre.

7. Installation selon l'une des revendications 5 et 6, **caractérisée en ce que** les six plaques de fixation (28, 28, 30, 30, 32, 32) sont coplanaires et soudées au cadre vertical (16) et comprennent trois plaques (28, 30, 32) qui s'étendent au-delà d'un des deux profilés verticaux (26) et trois plaques (28, 30, 32) qui s'étendent au-delà de l'autre profilé vertical (26).

8. Installation selon l'une des revendications 5 à 7, **caractérisée en ce que** les plaques de fixation de caisson (28, 28, 30, 30) formant partie du cadre (16) sont propres à être fixées respectivement contre les quatre plaques homologues (54) d'un caisson par l'intermédiaire de moyens de fixation du type à vissage, et avec interposition de plaques d'espacement (57).

9. Installation selon l'une des revendications 5 à 8, **caractérisée en ce que** les plaques de fixation (54) du caisson (18) sont coplanaires et soudées au caisson.

10. Installation selon l'une des revendications 1 à 9, **caractérisée en ce que** le caisson (18) comprend quatre profilés (42) formant la partie inférieure (40) et supportant les pieds réglables (50), quatre profilés (46) formant la partie supérieure surfacée (44) et quatre profilés verticaux (48) reliant la partie inférieure (40) et la partie supérieure surfacée (44).

11. Procédé de montage d'une installation selon l'une des revendications précédentes, comprenant les opérations suivantes :
a) assembler le cadre (16) au sol ;
b) placer le cadre verticalement et le tenir verticalement ;
c) présenter les caissons (18) de part et d'autre du cadre vertical (16) et les fixer à celui-ci ;
d) répéter, le cas échéant, les opérations a) à c) ci-dessus pour d'autres cadres et caissons, pour former le bâti (10) de l'installation ;
e) monter des équipements ou accessoires (60, 62) sur le bâti ainsi constitué ; et
f) régler le niveau en agissant sur les pieds réglables (50) des caissons (18).

12. Procédé selon la revendication 11, **caractérisé en ce qu'**il comprend l'opération supplémentaire suivante :
g) fixer les modules (14) sur les parties supérieures surfacées (44) des caissons (18).
